(19) **Europäisches Patentamt**
**European Patent Office**
**Office européen des brevets**

(11) **EP 3 763 137 B1**

(12) **EUROPEAN PATENT SPECIFICATION**

(45) Date of publication and mention
of the grant of the patent:
**30.11.2022 Bulletin 2022/48**

(21) Application number: **18816150.9**

(22) Date of filing: **18.12.2018**

(51) International Patent Classification (IPC):
**H04W 12/062** (2021.01)   **H04W 4/021** (2018.01)
**H04W 4/02** (2018.01)   **H04W 12/06** (2021.01)
**H04W 4/40** (2018.01)   **H04L 9/40** (2022.01)

(52) Cooperative Patent Classification (CPC):
**H04W 4/40; H04W 4/021; H04W 4/023;**
**H04W 4/025; H04W 12/06; H04W 12/062;**
H04L 63/0869; H04W 12/66

(86) International application number:
**PCT/EP2018/085628**

(87) International publication number:
**WO 2019/170272 (12.09.2019 Gazette 2019/37)**

(54) **PRE-AUTHENTICATION FOR V2X COMMUNICATION**

VOR-AUTHENTIFIZIERUNG FÜR V2X KOMMUNIKATION

PRE-AUTHENTIFICATION POUR LA COMMUNICATION V2X

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **08.03.2018 EP 18305250**

(43) Date of publication of application:
**13.01.2021 Bulletin 2021/02**

(73) Proprietor: **Thales Dis France SAS**
**92190 Meudon (FR)**

(72) Inventors:
• **SCHMITT, Sébastien**
**92190 Meudon (FR)**
• **MAUNIER, Gérald**
**92190 Meudon (FR)**
• **TRESSOL, Ludovic**
**92190 Meudon (FR)**
• **DAO, Frederic**
**92190 Meudon (FR)**

(74) Representative: **Dai, Simin**
**Thales Dis France SAS**
**Intellectual Property Department**
**6, rue de la Verrerie**
**92190 Meudon (FR)**

(56) References cited:
**US-A1- 2014 162 687**

• **GUO WEI ET AL: "FPAP: Fast Pre-distribution
Authentication Protocol for V2I", 1 November
2016 (2016-11-01), MEDICAL IMAGE COMPUTING
AND COMPUTER-ASSISTED INTERVENTION -
MICCAI 2015 : 18TH INTERNATIONAL
CONFERENCE, MUNICH, GERMANY, OCTOBER
5-9, 2015; PROCEEDINGS; [LECTURE NOTES IN
COMPUTER SCIENCE; LECT.NOTES
COMPUTER], SPRINGER INTERNATIONAL
PUBLISHING, CH, XP047361016, ISSN: 0302-9743
ISBN: 978-3-642-38287-1 [retrieved on
2016-11-01] abstract section 1 section 3.1 section
4.2**
• **LYU CHEN ET AL: "PBA: Prediction-Based
Authentication for Vehicle-to-Vehicle
Communications", IEEE TRANSACTIONS ON
DEPENDABLE AND SECURE COMPUTING, IEEE
SERVICE CENTER, NEW YORK, NY, US, vol. 13,
no. 1, 1 January 2016 (2016-01-01), pages 71-83,
XP011592027, ISSN: 1545-5971, DOI:
10.1109/TDSC.2015.2399297 [retrieved on
2016-01-13]**

• JUAN A. MARTINEZ ET AL: "Impact of the Pre-Authentication Performance in Vehicular Networks", VEHICULAR TECHNOLOGY CONFERENCE FALL (VTC 2010-FALL), 2010 IEEE 72ND, 1 September 2010 (2010-09-01), pages 1-5, XP055492826, Piscataway, NJ, USA DOI: 10.1109/VETECF.2010.5594249 ISBN: 978-1-4244-3573-9

**Description**

TECHNICAL FIELD

The present invention relates to a method for optimizing data exchanges between a first and at least one second wireless communication device. It is applicable to the Internet of things and vehicle-to-everything (V2X) technologies.

BACKGROUND OF THE INVENTION

The international Telecommunication Union (ITU) defines the Internet of Things (IoT) in the ITU-T Y.2060 recommendation as a "global infrastructure for the information society, enabling advanced services by interconnecting (physical and virtual) things based on existing and evolving interoperable information and communication technologies". The Internet of Things integrates different technologies including Machine-to-Machine (M2M) communications referring to the technologies enabling direct communications between devices. Further, M2M communications can be used in the context of vehicle-to-everything (V2X) communications, that is to say between a first wireless communication device embedded in a vehicle and a second wireless communication device implemented on another material such as a second vehicle, an infrastructure or a pedestrian.

The number of IoT devices is growing fast and devices like car embedded wireless communication devices will have to manage huge volumes of data. In some scenarios like autonomous vehicles, critical decisions have to be made instantaneously based on data received from other devices. It is crucial in term of security that this information is trustable and comes from an authenticated device. To achieve these goals, the various wireless communication devices have to trust each other as soon as possible. One problem is that verifying identity and trust level of a large number of surrounding devices is time consuming. There is therefore a need to increase the speed of establishment for this trust relationship between wireless communication devices.

The prior art document GUO WEI ET AL: "FPAP: Fast Pre-distribution Authentication Protocol for V2I", 1 November 2016, MEDICAL IMAGE COMPUTING AND COMPUTER-ASSISTED INTERVENTION - MICCAI 2015 : 18TH INTERNATIONAL CONFERENCE, MUNICH, GERMANY, SPRINGER INTERNATIONAL PUBLISHING, CH, XP047361016, discloses authentication between a vehicle and infrastructure for Vehicular Ad Hoc Networks (VANET), proposing an authentication protocol using proactive authentication.

SUMMARY OF THE INVENTION

This invention relates to a method to anticipate secure data exchanges between a first vehicle and a second vehicle moving through a geographical space, a grid comprising a plurality of cells being used as a tessellation of at least a portion of said geographical space, the method comprising the steps of:

- estimating for at least a cell j of the grid for the first vehicle a first probability P(1,j) and for a second vehicle a second probability P(2,j) of being present in at least one cell j of the grid in a predetermined time interval;
- deriving from the first probability P(1,j) and the second probability P(2,j) an estimation JP of the probability that the first and second vehicles will be localized in cell j in the predetermined time interval;
- in case the estimation JP exceeds a predetermined value TH, transmitting a set of at least one pre-authentication guidance data to the first and second vehicle, said set being adapted for the first and second vehicle to set up a relation of trust between them.

According to an example, the method comprises the step of providing by the first and second vehicles a set of at least one data item allowing to statistically estimate their route in the geographical space.

According to an example, the cells which are crossed by the estimated route are considered for determining P(i,j), the other being considered as having a zero probability.

According to an example, the set of pre-authentication guidance data corresponds to a set of at least one security key allowing to add an electronic signature to the data directly exchanged between first and second vehicles.

According to an example, the set of pre-authentication guidance data comprises a request to authenticate and a temporary token or session key to be used by the first and second vehicle while exchanging data.

According to an example, the set of pre-authentication guidance data comprises a description data of the pre-authentication mechanism supported for pre-authenticating the first and second vehicles.

According to an example, the estimation of the first probability P(1,j) and the second probability P(2,j) is carried out in a near future defined as an interval TI chosen ahead from the time of said estimation.

According to an example, the method is further adapted for pre-authenticating the first vehicle and a fixed infrastructure instead of the second vehicle.

The invention also relates to a system for anticipating the pre-authentication of two vehicles moving through a geographical space, a grid comprising a plurality of cells being used as a tessellation of at least a portion of said geographical space, the system comprising a pre-authentication computation engine configured to:

- estimate for at least a cell j of the grid for the first vehicle a first probability $P(1,j)$ and for the second vehicle a second probability $P(2,j)$ of being present in at least one cell j of the grid in a predetermined time interval;
- derive from the first probability $P(1,j)$ and the second probability $P(2,j)$ an estimation JP of the probability that the first and second vehicles will be localized in cell j in this near future;
- in case the estimation JP exceeds a predetermined value TH, to transmit a set of at least one pre-authentication guidance data to the first and second vehicle, said set being adapted for the first and second vehicles to set up a relation of trust between them

According to an example, the system is implemented as a server computer.

According to an example, the system comprises a data modelling engine adapted to compute a vehicle model trained by a learning machine, the vehicle model reflecting the behaviour or habits associated to the vehicle.

According to an example, a vehicle model is generated based on a statistical analysis of the vehicle's movement over time, using for example a history of collected GPS data.

According to an example, the system comprises a probability route engine adapted to apply the vehicle models to estimate the one or several routes that are likely to be used by the first and second vehicles.

According to an example, the system is implemented in a cloud server adapted to communicate with the first and second vehicles.

The invention also relates to a computer program product comprising instructions which, when the program is executed by a computer, cause the computer to carry out the steps of the method described above.

BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:

- Figure 1 provides an example of a communication system allowing to anticipate the establishment of a relation of trust between two of more vehicles;
- Figure 2 illustrates a geographical space discretized into a plurality of cells for anticipating the mutual authentication of vehicles;
- Figure 3 is an example of sequence diagram illustrating how the establishment of a relation of trust is established between two of more vehicles;
- Figure 4 provides an example of the main processes that can be implemented by a system for pre-authenticating at least a pair of vehicle;
- Figures 5A-5C provide a more detailed view of the processes implemented in the pre-authentication system.

DETAILED DESCRIPTION

This invention is a way to optimize the treatment of high-speed data exchanges between moving devices. For that purpose, the identity of the devices are pre-processed in order to establish a trusted relationship before actual data communication happens.

According to an important aspect of the invention, a first vehicle and a second vehicle are pre-authenticated so that a relation of trust is established between said first and second communication devices. In other words, the provisioning of security credentials in the vehicles, which can be distributed by the pre-authentication system or resulting from the authentication process, can be anticipated such that the relation of trust is already established between the two vehicles at the time of starting the data exchange. Therefore, no additional delay is required for establishing this relation of trust. This is particularly useful when critical data need to be exchanged between vehicles.

In this description, a vehicle designates a mobile apparatus adapted for transporting people, goods or materials. Examples of vehicles are cars, boats or drones.

The invention is also applicable for pre-authenticating a vehicle with a fixed infrastructure such as a toll gate.

According to the invention, the vehicles have communication capabilities allowing them to exchange data with each other on a wireless interface. For that purpose, a vehicle can embed a wireless communication device enabling to transmit and receive data on one or several wireless interfaces.

In the following description, a wireless communication device designates a device capable or sending and receiving data on a wireless interface. It can be implemented thanks to a combination of hardware and software and support one or several wireless technologies such as Wi-Fi, Bluetooth, Universal Mobile Telecommunications System (UMTS), LTE (Long Term Evolution), Global System for Mobile Communications (GSM) or 5G.

According to an example, the wireless communication device can embed or cooperate with a credential container which is configured to store security credentials enabling the relation of trust between pre-authenticated vehicles.

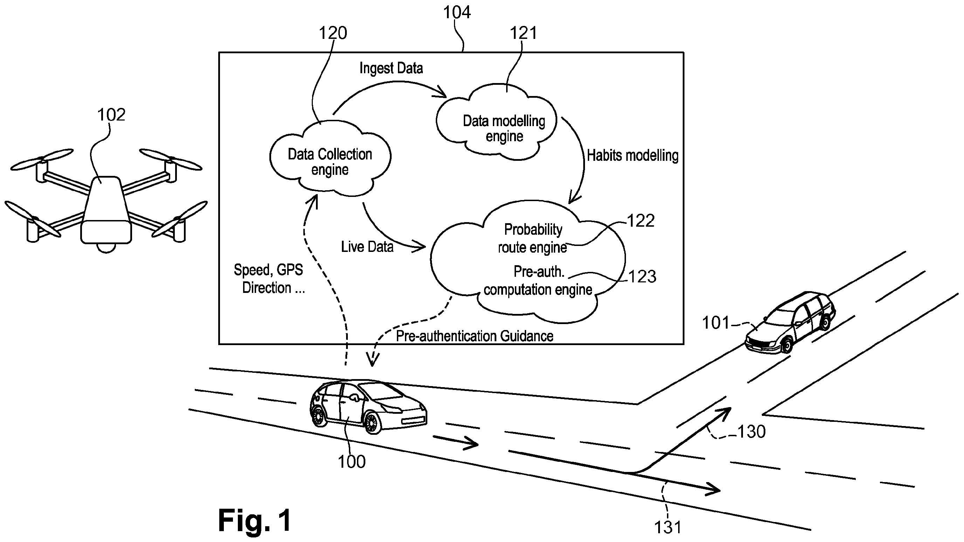

**Figure 1** provides an example of a communication system allowing to anticipate the establishment of a relation of trust between two of more vehicles.

The illustrated communication system is represented as comprising three vehicles 100, 101, 102 with wireless communication capabilities and a pre-authentication system 104. The pre-authentication system can be implemented using one or several remote servers. Server computing generally refers to a network infrastructure allowing access to shared resources such as storage and applications. This encompasses what one is calling cloud computing. Server computing enables a local device, for example a personal computer connected to the internet, to access remotely to these shared resources.

The communication system can use data collected for a given vehicle or associated to a user of the vehicle with the aim of predicting one or several route that can be used by the vehicle with a reasonable probability level. Further, additional information can be transmitted to the pre-authentication system 104 at the beginning of the journey to increase the accuracy of the pre-authentication mechanism. For example, the communicating device can notify the system each time its current route changes.

The vehicles 101-103 are able to directly communicate together on a wireless interface in an authenticated mode, which means after a relation of trust has been established between these devices. To optimize the authentication process, devices are configured to send data to the pre-authentication system 104 in order to receive pre-authentication guidance data.

According to an embodiment, the pre-authentication system 104 implements a data collection engine 120, a data modelling engine 121, a probability route engine 122 and a pre-authentication engine 123.

The data collection engine 120 aims at collecting or determining the location of the vehicles of the system using for example data received from the vehicle at the beginning of its journey or dynamically in the form of updates.

In addition, data captured by other systems can also be collected and used by the data collection engine 120.

For example, a mobile network operator (MNO) providing wireless connectivity to the vehicles of the communication system implement a location service and provide localisation data to the data collection engine 120.

Further, video processing of data provided by a network of video sensors allowing detecting presence of devices in a given area. According to another example, the result of processing the strength of the radio signal can also be used.

The data modelling engine 121 can be adapted to compute a vehicle model trained by a learning machine. A vehicle model is reflecting the behaviour or habits associated to the vehicle. As an example, a vehicle model can be generated based on a statistical analysis of the vehicle's movement over time, using for example a history of collected GPS data of a user calendar.

The probability route engine 122 can for example apply the vehicle's model generated by the data modelling engine 121 and additionally other contextual data such as the weather conditions, road condition of the user's calendar. Further, data collected from the vehicle such as its speed, direction and/or altitude can be used. The application of the vehicle's model in addition to the aforementioned additional data allows the probability route engine to provide a list of routes 130, 131 that are likely to be used by vehicles monitored in the communication system. These routes can be for example associated with a probability ranking.

The pre-authentication computation engine 123 uses the routes provided by the probability route engine 122 to estimate the presence of the vehicles the different cells composing a geographical grid.

According to an embodiment of the invention, the geographic space through which the vehicle can move is discretized in a plurality of cells forming a grid.

The pre-authentication computation engine 123 determines for at least a subset of the cells composing the grid the probability for the vehicles that are monitored by the system to be localized in a near future in each of these cells.

The expression near future refers for example to a time interval TI which can be defined as follow:

$$TI(t_0) = [t_0 + T1; t_0 + T2]$$

where:

$t_0$ refers to the current time at which is prediction is performed;

$T1$ and $T2$ are two timing values defined with $T2 > T1$.

Therefore, the duration of this time interval is equal to $T2 - T1$.

As an example, if $T1$ is equal to ten seconds and $T2$ equal to twelve seconds, the pre-authentication computation engine 123 will estimate for a given cell of the grid the probability for the vehicle to be localized in said cell in a time interval comprised between ten and twelve seconds ahead from the current timing $t_0$ at which the estimation is performed.

Then, based on the probability for two or more vehicles to be present in the same cell in this near future, the pre-authentication system 104 sets up a relation of trust for these vehicles to be capable to directly exchange data. For example, if the probability of two vehicles to be in the same cell is considered as sufficient, pre-authentication guidance data can be allocated and transmitted to them. These pre-authentication guidance data are such that they enable the relation of trust between these vehicles for them to be able of exchanging data securely. As the establishment of this relation of trust is anticipated which means that it is set up before the data exchange is needed, delays for transmitting and receiving data are minimized.

According to an example, the pre-authentication guidance data corresponds to a set of at least one security credential. This set of at least one security credential corresponds for example to a set of at least one security key allowing to add an electronic signature to the data directly exchanged between pre-authenticated vehicles. An electronic signature is a digest of a message characterising the data with a low risk of error in view of the level of a required integrity level.

According to some alternative embodiments, the pre-authentication guidance data can be composed:

- a list of vehicle identifiers whose a given vehicle must talk to in order to pre-authenticate;
- a request to authenticate and distribution of a temporary token or session key;
- a description of the supported pre-authentication mechanism.

The pre-authentication data can be stored in a credential container embedded in the targeted vehicle. A credential container is an enclave composed of hardware and/or software in which a set of at least one credentials allowing to set up of communication channel with a wireless network can be provisioned. An example of credential container is an embedded Universal Integrated Circuit Card (eUICC), also called embedded SIM (eSIM). It refers to a secure element designed to manage multiple mobile network operator subscriptions. It is available in various form factors, either plugged-in or soldered and is manufactured by an eUICC manufacturer (EUM). An eUICC is therefore easy to integrate in any kind of device.

According to an example, the engines composing the pre-authentication system 104 may be instantiated in separated systems. For example, the data modelling engine 121 can be hosted in the vehicles for them to be able of generating their own model, or in a cloud server or it can be grouped with the other engines in a central system.

According to an example, some criteria may be considered to prioritize the vehicle to be pre-authenticated. For example, for emergency vehicles a lower probability level may be considered for triggering the pre-authentication of emergency vehicles.

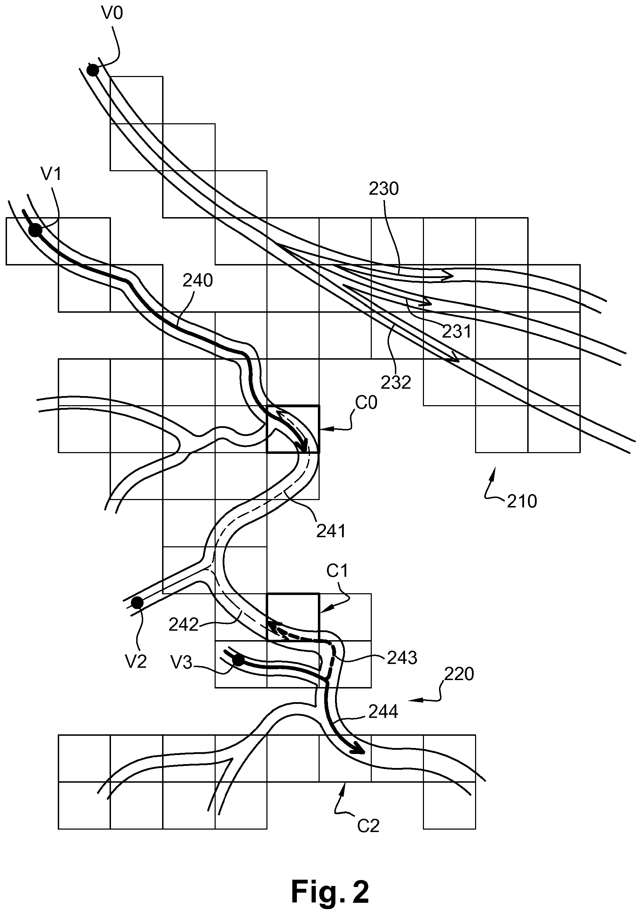

**Figure 2** illustrates a geographical space discretized into a plurality of cells for anticipating the mutual authentication of vehicles.

On this figure, two separated road networks 210, 220 are represented. A first vehicle V0 is traveling on the first road network 210 and three other vehicles V1, V2, V3 are travelling on the second road network 220.

The geographical space is discretized into a plurality of cells. A cell is a sub-area of the geographical space. According to this example, probabilities of presence in a near future of the vehicles travelling in this cells is estimated. According to this example, the grid is composed of a plurality of square-shaped cells of equal sizes. However, other alternatives can also be implemented. Different cells and sizes of cells can be used. For example, the configuration of the cell can be such that only the areas where the vehicles can move are covered. This example shows a tessellation of the geographical space in two dimensions. However, a three dimensional division of the geographical space can also be considered. This would be particularly useful in case the monitored vehicles include drone or aircrafts.

According to the example of figure 2, different routes that can be used by each of the four vehicles in a near future are represented. Taking into account the topography of the road network 210, the probability route engine estimates that vehicle V0 has three options 230, 231 and 232. Similarly, a single route 240 is estimated for vehicle V1, two routes 241, 242 are estimated for vehicle V2 and two routes 243, 244 are estimated for vehicle V3.

In this example, the pre-authentication computation engine 123 estimates that vehicle V1 and V2 will be in situation of exchanging data in cell C0 with a reasonable level of probability and that vehicles V2 and V3 will be in situation of exchanging data in cell C1 with a reasonable level of probability. This will trigger the provisioning of pre-authentication guidance data.

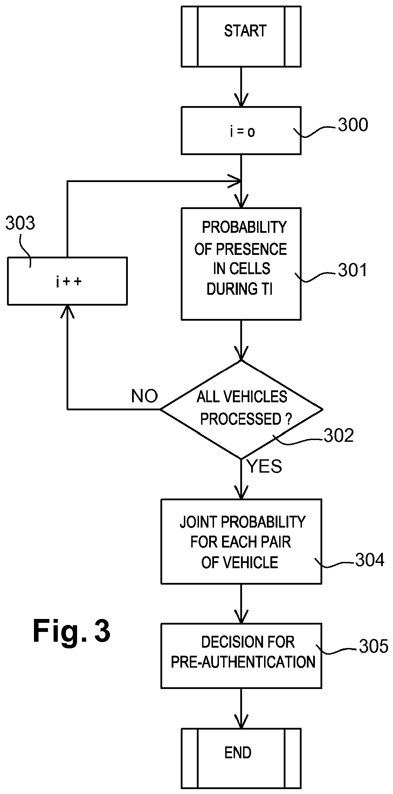

**Figure 3** is an example of sequence diagram illustrating how the establishment of a relation of trust is established between two of more vehicles.

According to this example, N vehicles are present in a given geographical space associated with a grid composed of a plurality of cells. Each of the vehicle is noted Vi with i being comprised between zero and N-1.

According to this example, the first stage after initialization 300 is to determine 301 the probability of presence in a near future of each of the vehicles Vi in the different cells composing the grid. In a near future means that the probability is for example estimated for a predetermined time interval TI ahead from the time at which the estimation is made. The probability of presence for vehicle Vi in a cell Cj of the grid associated with an index j is noted $P(i,j)$.

As an example an estimation of the one or several routes that are estimated for a given vehicles can be used for determining $P(i,j)$. For example, only the cells which are crossed by the estimated route are considered for determining $P(i,j)$, the other being considered as having a zero probability. Referring to the example of figure 2, and taking into account the following notations:

- $P(1,0)$ designates the probability of presence of V1 in cell C0 during time interval TI;
- $P(2,0)$ designates the probability of presence of V2 in cell C0 during time interval TI;
- $P(2,1)$ designates the probability of presence of V2 in cell C1 during time interval TI;
- $P(3,1)$ designates the probability of presence of V3 in cell C1 during time interval TI.

According to this example, only one route is estimated for vehicle V1 and it is considered as highly probable that the vehicle V1 will be localized in cell C0.

For example, the pre-authentication computation engine 123 estimates $P(1,0)$ as equal to 0.9.

The probability $P(2,0)$ of presence of V2 in cell C0 is considered by the probability route engine as equivalent to the probability $P(2,1)$ of presence of V2 in cell C1. One have for example:

$$P(2,0) = P(2,1) = 0.45$$

The probability $P(3,1)$ of presence of V3 in cell C1 is considered by the probability route engine as equivalent to 0.4 and the probability $P(3,2)$ of presence of V3 in cell C2 as equal to 0.3.

When the probabilities $P(i,j)$ are determined for all indexes i and j 302, 303, it is then decided 305 if pre-authentication needs to be triggered and in which cell. For that purpose, the probability of having at the same time two vehicles in the same cell is determined. According to an example, a joint probability $JP(j)$ can be determined 302 for all relevant cells, and in particular for cells C0 and C1:

$$JP(0) = P(1,0){\times}P(2,0) = 0.9{\times}0.45 = 0.405$$

$$JP(1) = P(2,1) {\times}P(3,1) = 0.45{\times}0.4 = 0.162$$

According to an example, the joint probability can then be compared to a predetermined threshold TH for triggering the pre-authentication.

If TH is set up equal to 0.1, this means that the criteria for triggering the pre-authentication is met for both cells C0 and C1 as both $JP(0)$ and $JP(1)$ exceed TH.

This example is very simple and provided for exemplary purpose. The person skilled in the art will be able to adapt this technology for being able to estimate the probability of having up to N vehicles in the same cell and to decide which of them will need to be pre-authenticated, if any. As a non-limitative example, the joint probability in a given cell can be determined for all possible pair of vehicles among the N vehicles monitored by the system. If $M{\leq}N$ vehicles are considered as potentially present in the same cell in the near future, these can be later on provisioned with the same pre-authentication guidance data. Alternatively, joint probability distributions can be determined periodically for the various cells composing the geographical space.

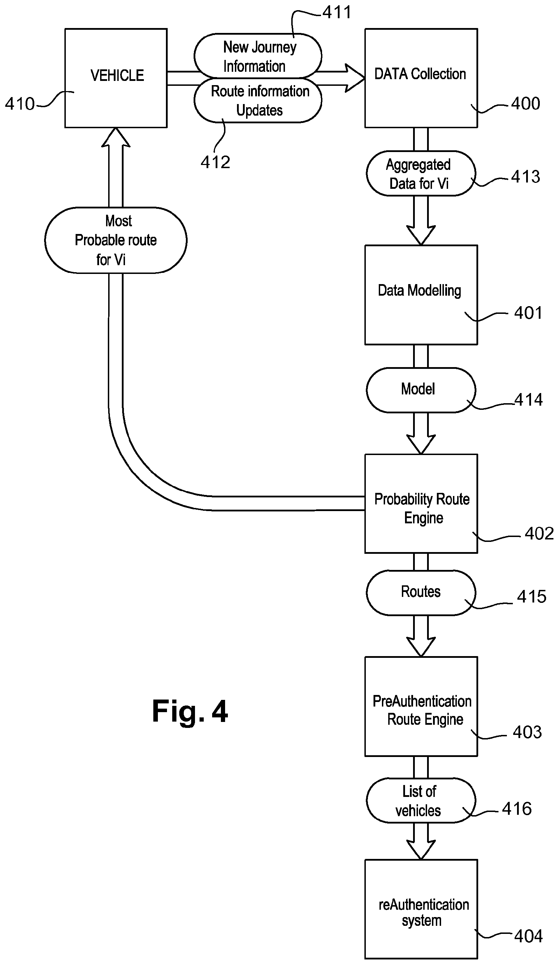

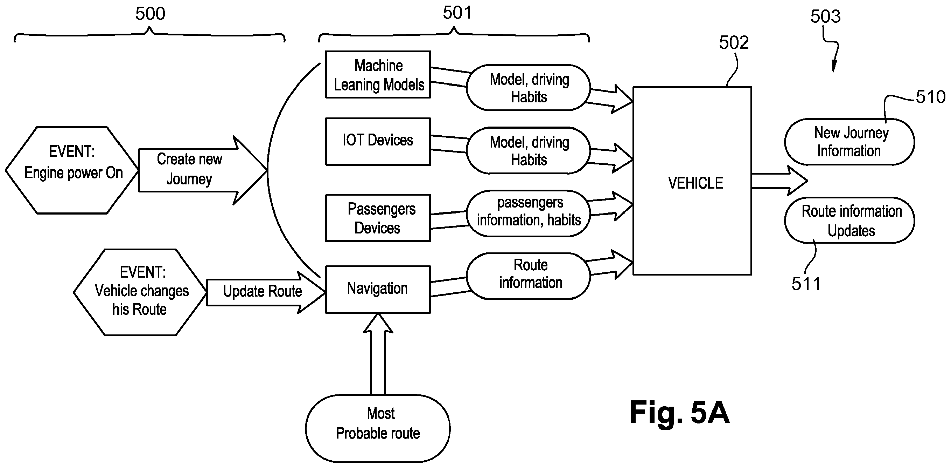

**Figure 4** provides an example of the main processes that can be implemented by a system for pre-authenticating at least a pair of vehicle. Then, **Figures 5A-5C** provide a more detailed view of the processes implemented in the pre-authentication system.

This example shows the use of machine learning for estimating the routes used by the vehicles of the system, but the skilled person will appreciate that this is only an example and that traditional statistical methods can also be used for that purpose. According to another example, one or several estimated routes can be provided to the pre-authentication system 104 by a service provider implementing navigation applications such as ViaMichelin (trademark), Google Maps (trademark) or Waze (trademark).

First the vehicle transmits data to the entity of the system that is responsible of data collection 400. Information 411 can be transmitted at the beginning of the journey including for example a route estimated by a navigation module embedded in the vehicle. In addition or alternatively, other data 412 can be transmitted regularly taking into account the movement of the vehicle. Then, aggregated data 413 for are transmitted aggregated for the different vehicles monitored by the system.

According to this example, the aggregated data is then used by a machine learning engine to determine 401 a model of the vehicle displacements. The model is then transmitted to a probability route engine for estimating 402 or refining the routes that are likely to be used by the vehicle. The routes, possibility associated with a probability of use PoU, are then communicated to a pre-authentication engine 403 for determining groups of vehicles for which a pre-authentication is needed. These lists of vehicle 416 are then used for triggering the pre-authentication 404, for example by communicating pre-authentication guidance data to the vehicle identified in the provided lists.

**Figure 5A** illustrates the data types generated and gathered by a given vehicle for being later used by the pre-authentication system.

On this example, it is underlined that one or several events 500 can be used for triggering the data generation and its transmission by a vehicle 502 for participating to the pre-authentication mechanism. These events can be used to activate one or several modules 501 adapted to generate data which will then enable the vehicle to generate input data 503 usable for the pre-authentication mechanism.

Examples of data provided to the pre-authentication system are data representative of the journey 510 that is sent one time and update data of the route 511 which can be transmitted when a change is detected and provided hereafter:

Data related to the vehicle movement:

- current location;

- current direction, transmitted for example as a vector;

- current altitude, which can be particularly useful in an embodiment where the vehicle is a drone;

- current speed, that has a direct impact on the size of the pre authentication area.

Data related to the vehicle's destination:

- based on existing known routes and maps around the current device position;
- based on air corridor.

Predictive information:

- behavioural model from Machine learning, in order to help determining the possible destinations or the speed for example;
- predictive speed based on routes and maps.

Known destination and path:

- targeted destination has been set in the vehicle;
- autonomous vehicle/taxi passenger destination.

Driver information:

- usual driving profile.

Passengers information:

- upcoming Calendar meetings time and location;
- children presence indicating probable destination.

Environmental events:

- weather conditions;
- closed roads.

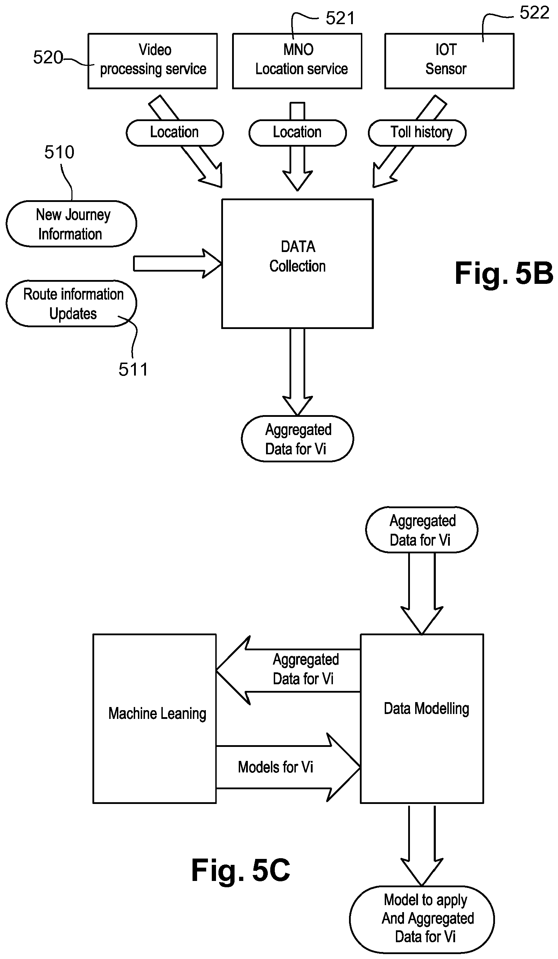

**Figure 5B** illustrates how collected data can be aggregated in order to feed the pre-authentication system.

In addition to the journey data 510 and the route information updates 511, data 520, 521, 522 coming from external systems can also be used.

**Figure 5C** illustrates the process of generating a model for predicting the location of the vehicles monitored by the system.

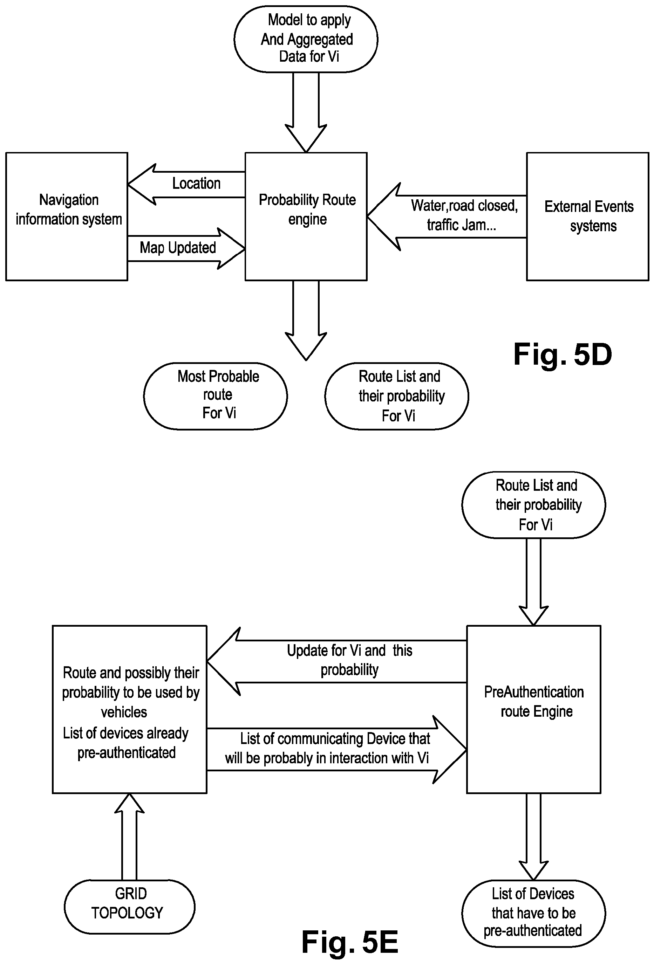

**Figure 5D** illustrates the possible interactions of a probability route engine with external systems.

**Figure 5E** illustrates in a simplified way a pre-authentication engine.

## Claims

1. A method to anticipate secure data exchanges between a first vehicle and a second vehicle moving through a geographical space, a grid comprising a plurality of cells being used as a tessellation of at least a portion of said geographical space, the method comprising the steps of:

    - estimating (301) for at least a cell j of the grid for the first vehicle a first probability $P(1,j)$ and for the second vehicle a second probability $P(2,j)$ of being present in at least one cell j of the grid in a predetermined time interval;
    - deriving (304) from the first probability $P(1,j)$ and the second probability $P(2,j)$ an estimation JP of the probability that the first and second vehicles will be localized in cell j in the predetermined time interval;
    - in case the estimation JP exceeds a predetermined value TH, transmitting a set of at least one pre-authentication guidance data to the first and second vehicles, said set being adapted for the first and second vehicles to set up a relation of trust between them.

2. The method according to claim 1, wherein the method comprises the step of providing by the first and second vehicles a set of at least one data item allowing to statistically estimate their route in the geographical space.

3. The method according to claim 2, wherein the cells which are crossed by the estimated route are considered for determining $P(i,j)$, the other being considered as having a zero probability.

4. The method according to any of the preceding claims, wherein the set of pre-authentication guidance data corresponds to a set of at least one security key allowing to add an electronic signature to the data directly exchanged between first and second vehicles.

5. The method according to any of claims 1 to 4, wherein the set of pre-authentication guidance data comprises a request to authenticate and a temporary token or session key to be used by the first and second vehicle while exchanging data.

6. The method according to any of the preceding claims, wherein the set of pre-authentication guidance data comprises a description data of the pre-authentication mechanism supported for pre-authenticating the first and second vehicles.

7. The method according to any of the preceding claims, wherein the estimation (301) of the first probability $P(1,j)$ and the second probability $P(2,j)$ is carried out in a near future defined as an interval TI chosen ahead from the time of said estimation (t0).

8. The method according to any of the preceding claims being further adapted for pre-authenticating the first vehicle and a fixed infrastructure instead of the second vehicle.

9. A system (104) for anticipating the pre-authentication of two vehicles moving through a geographical space, a grid comprising a plurality of cells being used as a tessellation of at least a portion of said geographical space, the system comprising a pre-authentication computation engine (123) configured to:

    - estimate (301) for at least a cell j of the grid for the first vehicle a first probability $P(1,j)$ and for the second vehicle a second probability $P(2,j)$ of being present in at least one cell j of the grid in a predetermined time interval;
    - derive (304) from the first probability $P(1,j)$ and the second probability $P(2,j)$ an estimation JP of the probability that the first and second vehicles will be localized in cell j in the predetermined time interval;
    - in case the estimation JP exceeds a predetermined value TH, to transmit a set of at least one pre-authentication guidance data to the first and second vehicle, said set being adapted for the first and second vehicles to set up a relation of trust between them

10. The system according to claim 9, being implemented as a server computer.

11. The system according to claim 10, comprising a data modelling engine (121) adapted to compute a vehicle model trained by a learning machine, the vehicle model reflecting the behaviour or habits associated to the vehicle.

12. The system according to claim 11, wherein a vehicle model is generated based on a statistical analysis of the vehicle's movement over time, using for example a history of collected GPS data.

13. The system according to claim 11 or 12, comprising a probability route engine (122) adapted to apply the vehicle models to estimate the one or several routes that are likely to be used by the first and second vehicles.

14. The system according to any of claims 9 to 13 implemented in a cloud server adapted to communicate with the first and second vehicles.

15. A computer program product comprising instructions which, when the program is executed by a computer, cause the computer to carry out the steps of the method of any of claims 1 to 8.

**Patentansprüche**

1. Verfahren, um sicheren Datenaustausch zwischen einem ersten Fahrzeug und einem zweiten Fahrzeug vorauszusehen, die sich durch einen geografischen Raum bewegen, Raster umfassend eine Vielzahl von Zellen, die als eine Tessellierung von mindestens einem Teil des geografischen Raums verwendet werden, das Verfahren umfassend die Schritte von:

   - Schätzen (301), für mindestens eine Zelle j des Rasters für das erste Fahrzeug, einer ersten Wahrscheinlichkeit P (1,j) und für das zweite Fahrzeug, einer zweiten Wahrscheinlichkeit P(2,j), die in mindestens einer Zelle j des Rasters in einem zuvor bestimmten Zeitintervall vorhanden ist;
   - Ableiten (304), von der ersten Wahrscheinlichkeit P(1,j) und der zweiten Wahrscheinlichkeit P(2, j), einer Schätzung JP der Wahrscheinlichkeit, dass das erste und das zweite Fahrzeug in der Zelle j in dem zuvor bestimmten Zeitintervall lokalisiert werden;
   - falls die Schätzung JP einen zuvor bestimmten Wert TH überschreitet, Übertragen eines Satzes von mindestens einem Vorauthentifizierungsführungsdatenelement an das erste und das zweite Fahrzeug, wobei der Satz für das erste und das zweite Fahrzeug angepasst ist, um eine Vertrauensbeziehung zwischen ihnen einzurichten.

2. Verfahren nach Anspruch 1, wobei das Verfahren den Schritt eines Bereitstellens von einem Satz von mindestens einem Datenfeld, durch das erste und das zweite Fahrzeug, umfasst, das es ermöglicht, ihre Route in dem geografischen Raum statistisch zu schätzen.

3. Verfahren nach Anspruch 2, wobei die Zellen, die durch die geschätzte Route überschritten werden, zum Bestimmen von P(i,j) betrachtet werden, wobei die andere so betrachtet wird, eine Nullwahrscheinlichkeit aufzuweisen.

4. Verfahren nach einem der vorstehenden Ansprüche, wobei der Satz von Vorauthentifizierungsführungsdaten einem Satz von mindestens einem Sicherheitsschlüssel entspricht, der es ermöglicht, den Daten, die zwischen ersten und zweiten Fahrzeugen direkt ausgetauscht werden, eine elektronische Signatur hinzuzufügen.

5. Verfahren nach einem der Ansprüche 1 bis 4, wobei der Satz von Vorauthentifizierungsführungsdaten eine Anfrage für das Authentifizieren und einen vorläufigen Token oder einen Sitzungsschlüssel umfasst, der durch das erste und das zweite Fahrzeug während des Austauschens von Daten verwendet werden soll.

6. Verfahren nach einem der vorstehenden Ansprüche, wobei der Satz von Vorauthentifizierungsführungsdaten ein Beschreibungsdatenelement des Vorauthentifizierungsmechanismus umfasst, der zum Vorauthentifizieren des ersten und des zweiten Fahrzeugs unterstützt wird.

7. Verfahren nach einem der vorstehenden Ansprüche, wobei die Schätzung (301) der ersten Wahrscheinlichkeit P (1,j) und der zweiten Wahrscheinlichkeit P (2,j) in einer nahen Zukunft ausgeführt wird, definiert als ein Intervall TI, das vor dem Zeitpunkt der Schätzung (t0) ausgewählt ist.

8. Verfahren nach einem der vorstehenden Ansprüche, das ferner zum Vorauthentifizieren des ersten Fahrzeugs und einer festen Infrastruktur anstelle des zweiten Fahrzeugs angepasst ist.

9. System (104) zum Voraussehen der Vorauthentifizierung von zwei Fahrzeugen, die sich durch einen geografischen Raum bewegen, Raster umfassend eine Vielzahl von Zellen, die als eine Tessellierung von mindestens einem Teil des geografischen Raums verwendet werden, das System umfassend eine Vorauthentifizierungsberechnungsmaschine (123), die konfiguriert ist zum:

- Schätzen (301), für mindestens eine Zelle j des Rasters für das erste Fahrzeug, einer ersten Wahrscheinlichkeit P(1,j) und für das zweite Fahrzeug, einer zweiten Wahrscheinlichkeit P(2,j), die in mindestens einer Zelle j des Rasters in einem zuvor bestimmten Zeitintervall vorhanden ist;
- Ableiten (304), von der ersten Wahrscheinlichkeit P(1,j) und der zweiten Wahrscheinlichkeit P(2,j) einer Schätzung JP der Wahrscheinlichkeit, dass das erste und das zweite Fahrzeug in der Zelle j in dem zuvor bestimmten Zeitintervall lokalisiert werden;
- falls die Schätzung JP einen zuvor bestimmten Wert TH überschreitet, Übertragen eines Satzes von mindestens einem Vorauthentifizierungsführungsdatenelement an das erste und das zweite Fahrzeug, wobei der Satz für das erste und das zweite Fahrzeug angepasst ist, um eine Vertrauensbeziehung zwischen ihnen einzurichten

10. System nach Anspruch 9, das als ein Servercomputer implementiert ist.

11. System nach Anspruch 10, umfassend eine Datenmodellierungsmaschine (121), die angepasst ist, um ein durch eine Lernmaschine trainiertes Fahrzeugmodell zu berechnen, wobei das Fahrzeugmodell das Verhalten oder die Gewohnheiten widerspiegelt, die dem Fahrzeug zugehörig sind.

12. System nach Anspruch 11, wobei ein Fahrzeugmodell basierend auf einer statistischen Analyse der Bewegung des Fahrzeugs im Laufe der Zeit erzeugt wird, unter Verwendung zum Beispiel eines Verlaufs von gesammelten GPS-Daten.

13. System nach Anspruch 11 oder 12, umfassend eine Wahrscheinlichkeitsroutenmaschine (122), die angepasst ist, um die Fahrzeugmodelle anzuwenden, um die eine oder die vielen Routen zu schätzen, die wahrscheinlich durch das erste und das zweite Fahrzeug verwendet werden.

14. System nach einem der Ansprüche 9 bis 13, das in einem Cloud-Server implementiert ist, der angepasst ist, um mit dem ersten und dem zweiten Fahrzeug zu kommunizieren.

15. Computerprogrammprodukt, umfassend Anweisungen, die, wenn das Programm durch einen Computer durchgeführt wird, den Computer veranlassen, die Schritte des Verfahrens nach einem der Ansprüche 1 bis 8 auszuführen.


**Revendications**

1. Procédé pour anticiper des échanges de données sécurisées entre un premier véhicule et un second véhicule se déplaçant à travers un espace géographique, une grille comprenant une pluralité de cellules étant utilisées en tant que tessellation d'au moins une partie dudit espace géographique, le procédé comprenant les étapes suivantes :

- l'estimation (301), pour au moins une cellule j de la grille, pour le premier véhicule, d'une première probabilité P(1, j) et, pour le second véhicule, d'une seconde probabilité P(2, j), d'être présentes dans au moins une cellule j de la grille dans un intervalle de temps prédéterminé ;
- la dérivation (304), à partir de la première probabilité P(1, j) et de la seconde probabilité P(2, j), d'une estimation JP de la probabilité que les premier et second véhicules soient localisés dans la cellule j dans l'intervalle de temps prédéterminé ;
- dans le cas où l'estimation JP dépasse une valeur prédéterminée TH, la transmission d'un ensemble d'au moins une donnée de guidage de pré-authentification aux premier et second véhicules, ledit ensemble étant adapté pour les premier et second véhicules afin d'établir une relation de confiance entre eux.

2. Procédé selon la revendication 1, dans lequel le procédé comprend l'étape consistant à fournir, par les premier et second véhicules, un ensemble d'au moins une donnée permettant d'estimer statistiquement leur route dans l'espace géographique.

3. Procédé selon la revendication 2, dans lequel les cellules qui sont traversées par la route estimée sont considérées pour déterminer P(i, j), l'autre étant considérée comme ayant une probabilité nulle.

4. Procédé selon l'une quelconque des revendications précédentes, dans lequel l'ensemble de données de guidage de pré-authentification correspond à un ensemble d'au moins une clé de sécurité permettant d'ajouter une signature électronique aux données échangées directement entre des premier et second véhicules.

5. Procédé selon l'une quelconque des revendications 1 à 4, dans lequel l'ensemble de données de guidage de pré-authentification comprend une demande d'authentification et un jeton temporaire ou une clé de session à utiliser par le premier et le second véhicule tout en échangeant des données.

6. Procédé selon l'une quelconque des revendications précédentes, dans lequel l'ensemble de données de guidage de pré-authentification comprend des données de description du mécanisme de pré-authentification prises en charge pour pré-authentifier les premier et second véhicules.

7. Procédé selon l'une quelconque des revendications précédentes, dans lequel l'estimation (301) de la première probabilité P(1, j) et de la seconde probabilité P(2, j) est réalisée dans un futur proche défini comme un intervalle TI choisi à l'avance à partir du temps de ladite estimation (t0).

8. Procédé selon l'une quelconque des revendications précédentes, étant en outre adapté pour pré-authentifier le premier véhicule et une infrastructure fixe au lieu du second véhicule.

9. Système (104) pour anticiper la pré-authentification de deux véhicules se déplaçant à travers un espace géographique, une grille comprenant une pluralité de cellules étant utilisée en tant que tessellation d'au moins une partie dudit espace géographique, le système comprenant un moteur de calcul de pré-authentification (123) configuré pour :

   - estimer (301), pour au moins une cellule j de la grille, pour le premier véhicule, une première probabilité P(1, j) et, pour le second véhicule, une seconde probabilité P(2, j), d'être présentes dans au moins une cellule j de la grille dans un intervalle de temps prédéterminé ;
   - dériver (304), à partir de la première probabilité P(1, j) et de la seconde probabilité P(2, j), une estimation JP de la probabilité que

   les premier et second véhicules soient localisés dans la cellule j dans l'intervalle de temps prédéterminé ;

   - dans le cas où l'estimation JP dépasse une valeur prédéterminée TH, transmettre un ensemble d'au moins une donnée de guidage de pré-authentification au premier et au second véhicule, ledit ensemble étant adapté pour les premier et second véhicules afin d'établir une relation de confiance entre eux

10. Système selon la revendication 9, étant implémenté en tant qu'un ordinateur serveur.

11. Système selon la revendication 10, comprenant un moteur de modélisation de données (121) adapté pour calculer un modèle de véhicule entraîné par une machine d'apprentissage, le modèle de véhicule reflétant le comportement ou les habitudes associées au véhicule.

12. Système selon la revendication 11, dans lequel un modèle de véhicule est généré sur la base d'une analyse statistique du mouvement du véhicule au fil du temps, à l'aide, par exemple, d'un historique de données GPS collectées.

13. Système selon la revendication 11 ou 12, comprenant un moteur de routage de probabilité (122) adapté pour appliquer les modèles de véhicule afin d'estimer la ou les routes susceptibles d'être utilisées par les premier et second véhicules.

14. Système selon l'une quelconque des revendications 9 à 13 mis en œuvre dans un serveur en nuage adapté pour communiquer avec les premier et second véhicules.

15. Produit de programme informatique comprenant des instructions qui, lorsque le programme est exécuté par un ordinateur, amènent l'ordinateur à réaliser les étapes du procédé selon l'une quelconque des revendications 1 à 8.

**Fig. 1**

EP 3 763 137 B1

**Fig. 2**

```
                        ┌──────────┐
                        │  START   │
                        └──────────┘
                              │
                              ▼
                        ┌──────────┐
                        │  i = o   │────── 300
                        └──────────┘
                              │
          ┌──────────────────┼──◄───────────────────┐
          │                  ▼                       │
  303   ┌─────────┐    ┌──────────────┐              │
   ╲    │         │    │ PROBABILITY  │              │
    ╲   │         │    │ OF PRESENCE  │              │
        │  i + +  │    │  IN CELLS    │────── 301    │
        │         │    │  DURING TI   │              │
        └─────────┘    └──────────────┘              │
          ▲                  │                       │
          │                  ▼                       │
          │             ╱─────────────╲              │
          │     NO     ╱ ALL VEHICLES  ╲             │
          └──────◄────╱  PROCESSED ?    ╲────────────┘
                      ╲                 ╱
                       ╲               ╱──── 302
                        ╲─────────────╱
                              │ YES
                              ▼
                     ┌──────────────────┐
                     │ JOINT PROBABILITY│
                     │  FOR EACH PAIR   │
                     │   OF VEHICLE     │────── 304
                     └──────────────────┘
                              │
  Fig. 3                      ▼
                     ┌──────────────────┐
                     │  DECISION FOR    │────── 305
                     │ PRE-AUTHENTICATION│
                     └──────────────────┘
                              │
                              ▼
                        ┌──────────┐
                        │   END    │
                        └──────────┘
```

Fig. 4

Fig. 5A

520 —— | Video processing service | 521 —— MNO Location service | 522 —— IOT Sensor

Location | Location | Toll history

510

New Journey Information

Route information Updates

511

DATA Collection

Aggregated Data for Vi

**Fig. 5B**

Aggregated Data for Vi

Machine Leaning

Aggregated Data for Vi

Models for Vi

Data Modelling

**Fig. 5C**

Model to apply And Aggregated Data for Vi

Model to apply
And Aggregated
Data for Vi

Navigation
information system

Location

Map Updated

Probability Route
engine

Water,road closed,
traffic Jam...

External Events
systems

**Fig. 5D**

Most Probable
route
For Vi

Route List and
their probability
For Vi

Route List and
their probability
For Vi

Route and possibly their
probability to be used by
vehicles
List of devices already
pre-authenticated

Update for Vi and  this
probability

PreAuthentication
route Engine

List of communicating Device that
will be probably in interaction with Vi

GRID
TOPOLOGY

List of Devices
that have to be
pre-authenticated

**Fig. 5E**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- FPAP: Fast Pre-distribution Authentication Protocol for V2I. **GUO WEI et al.** MEDICAL IMAGE COMPUTING AND COMPUTER-ASSISTED INTERVENTION - MICCAI 2015 : 18TH INTERNATIONAL CONFERENCE, MUNICH, GERMANY. SPRINGER INTERNATIONAL PUBLISHING, 01 November 2016